# EUROPEAN PATENT SPECIFICATION

(11) **EP 3 385 161 B1**
(45) Date of publication and mention of the grant of the patent: **18.09.2019**
(21) Application number: 17200198.4
(22) Date of filing: 06.11.2017
(51) Int. Cl.: B64C 27/45, B64C 27/82, F16C 23/04, B64C 27/48

(54) **TEETERING TAIL ROTOR YOKE**
WIPPENDES HECKROTORJOCH
ÉTRIER DE ROTOR DE QUEUE À BATTEMENT

(30) Priority: 07.04.2017 US 201715482616
(43) Date of publication of application: 10.10.2018
(73) Proprietor: Bell Helicopter Textron Inc., Fort Worth, TX 76101 (US)
(72) Inventor: MUGHAL, Hassan A, Grand Prairie, TX 75054 (US); HALLETT, Jared Addison, Grapevine, TX 76051 (US); HALDEMAN, Andrew Paul, Fort Worth, TX 76102 (US)
(74) Representative: Barker Brettell LLP

(56) References cited:
- EP-A1- 2 587 079
- US-A- 2 830 669
- US-A- 3 193 019

## Description

### TECHNICAL FIELD

This disclosure relates generally to a teetering tail rotor yoke, and more particularly, though not exclusively, to a teetering tail rotor yoke with three or more bearings.

### BACKGROUND

EP 2 587 079 discloses a rotary system and method to control feathering movement of a rotor blade. The system has a yoke arm configured to rotate a rotor blade. A first bearing and a second bearing are utilized to secure the rotor blade to the yoke arm and are configured to restrict longitudinal and transverse movement, while allowing feathering movement of the rotor blade relative to yoke arm.

One way of accommodating blade pitch (or feathering) motion in teetering tail rotors is via a spherical bearing affixed to a yoke. The primary force reacted by these bearings is the centrifugal force (CF), which proportionally affects the bearings' load rating for given sizing constraints.

### SUMMARY

According to the present disclosure, there is provided a rotorcraft according to claim 1. Optional features of the rotorcraft are set out in the dependent claims.

According to one aspect of the present disclosure, a tail rotor assembly can include a yoke arm; a rotor blade; and at least three spherical bearings, each of the three spherical bearings carried by the yoke arm and configured to pivotally secure the rotor blade to the yoke arm and to allow feathering movement of the rotor blade relative to the yoke arm during flight.

In some embodiments, the three spherical bearings are evenly spaced from each other on the yoke arm.

In some embodiments, each of the three spherical bearings can include a race; a spherical ball rotatably carried within the housing; and a passage extending through the spherical ball and configured to couple with a first attachment means associated with the rotor blade for securing the rotor blade to the yoke arm.

In some embodiments, the yoke arm has a longitudinal axis, each of the three spherical bearings can include a center line; and wherein the each of the centerlines is aligned with the longitudinal axis of the yoke arm.

In some embodiments, the at least three bearings are configured to allow feathering movement of the rotor blade relative to the longitudinal axis, while restricting transverse and longitudinal movement of the rotor blade relative to the longitudinal axis.

In some embodiments, the yoke arm can include a thickness in the range of 0.019 m (0.75 inches) to 0.025 m (1.0 inches).

In some embodiments, the yoke can include a length in the range of 0.699 m (27.5 inches) and 0.724 m (28.5 inches).

In some embodiments, the yoke arm comprises a width in a range of 0.076 m (3.0 inches) to 0.089 m (3.5 inches).

In one embodiments, a rotorcraft can include a tail rotor assembly, the tail rotor assembly can include a yoke arm; a rotor blade; and at least three spherical bearings, each of the three spherical bearings carried by the yoke arm and configured to pivotally secure the rotor blade to the yoke arm and to allow feathering movement of the rotor blade relative to the yoke arm during flight.

In some embodiments, the three spherical bearings are even spaced from each other on the yoke arm.

In some embodiments, each of the three spherical bearings can include a housing; a spherical ball rotatably carried within the housing; and a passage extending through the spherical ball and configured to couple with a first attachment means associated with the rotor blade for securing the rotor blade to the yoke arm.

In some embodiments, the yoke arm has a longitudinal axis, each of the three spherical bearings can include a center line; and wherein the each of the centerlines is aligned with the longitudinal axis of the yoke arm.

In some embodiments, the at least three bearings are configured to allow feathering movement of the rotor blade relative to the longitudinal axis, while restricting transverse and longitudinal movement of the rotor blade relative to the longitudinal axis.

In some embodiments, the yoke arm can include a thickness in the range of 0.019 m (0.75 inches) to 0.025 m (1.0 inches).

In some embodiments, the yoke can include a length in the range of 0.699 m (27.5 inches) and 0.724 m (28.5 inches).

In some embodiments, the yoke arm can include a width in a range of 0.076 m (3.0 inches) to 0.0890 m (3.5 inches).

In one embodiments, a tail rotor yoke for a rotorcraft with a teetering tail rotor can include an elliptically shaped center portion that can receive a tail rotor gearbox; a first yoke arm extending from the center portion, the first yoke arm comprising at least three spherical bearing receiving sections; and a second yoke arm extending from the center portion, the first yoke arm comprising at least three spherical bearing receiving sections.

In some embodiments, the at least three spherical bearing receiving sections are evenly spaced apart.

In some embodiments, the first and second yoke arm can include a thickness in the range of 0.019 m (0.75 inches) to 0.025 m (1.0 inches).

In some embodiments, the tail rotor yoke comprises a length in the range of 0.699 m (27.5 inches) and 0.724 m (28.5 inches).

### BRIEF DESCRIPTION OF THE DRAWINGS

FIGS. 1A-1B illustrate an example aircraft in accordance with certain embodiments.
FIG. 2 illustrates various components of an aircraft in accordance with embodiments of the present disclosure.
FIG. 3 illustrates a tail rotor assembly of an aircraft in accordance with embodiments of the present disclosure.
FIGS. 4A-D illustrate various views of an example teetering tail rotor yoke with three spherical bearings in accordance with embodiments of the present disclosure.
FIG. 5A is a schematic diagram comparing a three bearing yoke with a two bearing yoke in accordance with embodiments of the present disclosure.
FIG. 5B is a cross-sectional view A-A from FIG. 5A.

### DETAILED DESCRIPTION

The following disclosure describes various illustrative embodiments and examples for implementing the features and functionality of the present disclosure. While particular components, arrangements, and/or features are described below in connection with various example embodiments, these are merely examples used to simplify the present disclosure and are not intended to be limiting. It will of course be appreciated that in the development of any actual embodiment, numerous implementation-specific decisions must be made to achieve the developer's specific goals, including compliance with system, business, and/or legal constraints, which may vary from one implementation to another. Moreover, it will be appreciated that, while such a development effort might be complex and time-consuming, it would nevertheless be a routine undertaking for those of ordinary skill in the art having the benefit of this disclosure.

In the specification, reference may be made to the spatial relationships between various components and to the spatial orientation of various aspects of components as depicted in the attached drawings. However, as will be recognized by those skilled in the art after a complete reading of the present disclosure, the devices, components, members, apparatuses, etc. described herein may be positioned in any desired orientation. Thus, the use of terms such as "above," "below," "upper," "lower," or other similar terms to describe a spatial relationship between various components or to describe the spatial orientation of aspects of such components, should be understood to describe a relative relationship between the components or a spatial orientation of aspects of such components, respectively, as the components described herein may be oriented in any desired direction.

Further, the present disclosure may repeat reference numerals and/or letters in the various examples. This repetition is for the purpose of simplicity and clarity and does not in itself dictate a relationship between the various embodiments and/or configurations discussed.

Example embodiments that may be used to implement the features and functionality of this disclosure will now be described with more particular reference to the attached figures.

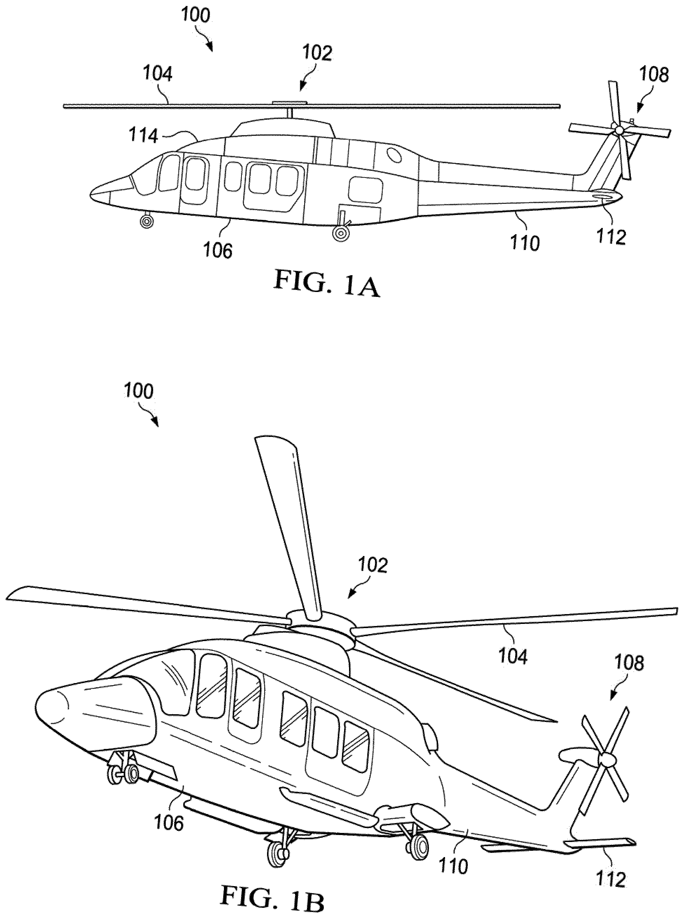

FIGS. 1A and 1B illustrate an example embodiment of a rotorcraft 100. FIG. 1A illustrates a side view of rotorcraft 100, while FIG. 1B illustrates a perspective view of rotorcraft 100. Rotorcraft 100 includes a rotor system 102 with a plurality of rotor blades 104. The pitch of each rotor blade 104 can be managed or adjusted in order to selectively control direction, thrust, and lift of rotorcraft 100. Rotorcraft 100 further includes a fuselage 106, tail rotor or anti-torque system 108, an empennage 110, and a tail structure 112. In the illustrated embodiment, tail structure 112 may be used as a horizontal stabilizer. Torque is supplied to rotor system 102 and anti-torque system 108 using at least one engine.

It should be appreciated that rotorcraft 100 of FIGS. 1A and 1B is merely illustrative of a variety of aircraft that can be used to implement embodiments of the present disclosure. Other aircraft implementations can include, for example, fixed wing airplanes, hybrid aircraft, unmanned aircraft, gyrocopters, a variety of helicopter configurations, and drones, among other examples. Moreover, it should be appreciated that even though aircraft are particularly well suited to implement embodiments of the present disclosure, the described embodiments can also be implemented using non-aircraft vehicles and devices.

This disclosure describes a teetering yoke design that includes three spherical bearings. In embodiments, the three spherical bearings can be equally spaced apart, so that each bearing can react to 33 +/-2 % of the CF. Compared to yokes with two spherical bearings with a 50-50% split CF reaction, the multiple-bearing yoke described herein improves bearing and yoke life, facilitates weight reduction, improves kinematic clearances, and provides design redundancy in case of single bearing failure.

Example embodiments that may be used to implement the multiple bearing teetering yoke design are described below with more particular reference to the remaining figures.

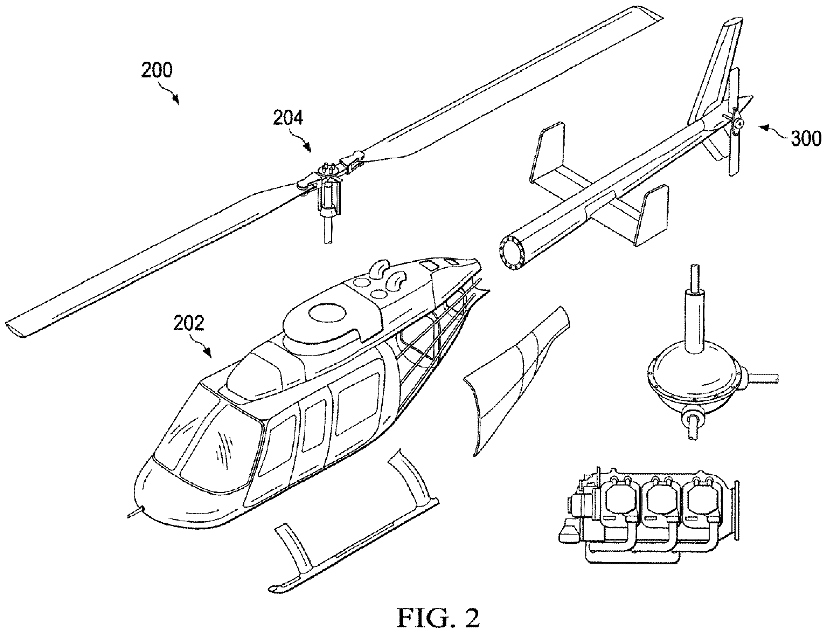

FIG. 2 illustrates various components of an aircraft 200 in accordance with embodiments of the present disclosure. The aircraft 200, which is illustrated in FIG. 2 as a helicopter, includes a fuselage 202, a main rotor system 204, and a tail rotor system 300, among other elements known to those of skill in the art. The fuselage 202, the outer core of the airframe, is an aircraft's main body section that houses the cabin which holds the crew, passengers, and cargo. Helicopter cabins have a variety of seating arrangements. Most have the pilot seated on the right side, although there are some with the pilot seated on the left side or center. The fuselage 202 also houses the engine, the transmission, avionics, flight controls, and the powerplant.

The main rotor system 204 is a rotating part of a helicopter that generates lift. The main rotor system 204 consists of a mast, hub, and rotor blades. The mast is a hollow cylindrical metal shaft which extends upwards from and is driven and sometimes supported by the transmission. At the top of the mast is the attachment point for the rotor blades called the hub. The rotor blades are then attached to the hub by any number of different methods.

The aircraft also includes a tail rotor (or antitorque system) 300 that counter acts torque produced by the rotating main rotor. Helicopters with a single, main rotor system 204 use a separate antitorque system 300. The tail rotor assembly 300 can include a variable pitch, antitorque rotor or tail rotor. Pilots can vary the thrust of the antitorque system to maintain directional control whenever the main rotor torque changes, or to make heading changes while hovering. Most helicopters drive the tail rotor shaft from the transmission to ensure tail rotor rotation (and hence control) in the event that the engine quits. Usually, negative antitorque thrust is needed in autorotations to overcome transmission friction.

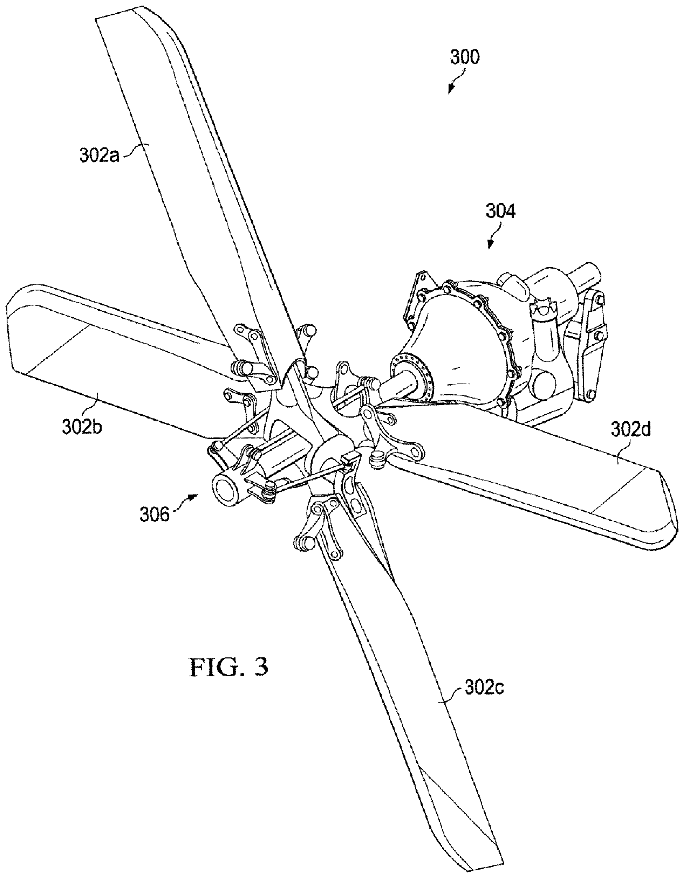

FIG. 3 illustrates a tail rotor assembly 300 of an aircraft in accordance with embodiments of the present disclosure. The tail rotor assembly 300 can include a plurality of rotor blades 302a-d. Rotor blades 302a and 302c can be secured onto the tail rotor assembly 300 by a tail rotor yoke (such as the three bearing tail rotor yoke 400). Similarly, rotor blade 302b and 302d can be secured onto the tail rotor assembly 300 by another tail rotor yoke.

In the exemplary embodiment, tail rotor assembly 300 includes four rotor blades 302a-d; however, it will be appreciated that tail rotor assembly 300 is adaptable for use with more or fewer blades in an alternative embodiment.

Tail rotor assembly 300 can include a tail rotor hub 306 that can secure one or more tail rotor yokes 400. Each tail rotor yoke 400 can secure two tail rotor blades.

The tail rotor assembly 300 can include a tail rotor drive system 304. The tail rotor drive system 304 can include an antitorque drive shaft and an antitorque transmission mounted at the end of a tail boom. The drive shaft may consist of one long shaft or a series of shorter shafts connected at both ends with flexible couplings. This allows the drive shaft to flex with the tail boom. The tail rotor transmission provides a right angle drive for the tail rotor and may also include gearing to adjust the output to optimum tail rotor rpm. Tail rotors may also have an intermediate gearbox to turn the power up a pylon or vertical fin.

The tail rotor assembly 300 can include a plurality of yoke arms, such as yoke arm 401. Two tail rotor blades e.g., 302a-302c can be secured to each yoke 401. Each yoke can include six spherical bearings, three on each yoke arm of the yoke. Each of the three spherical bearings carried by the yoke arm and configured to pivotally secure the rotor blade to the yoke arm and to allow feathering movement of the rotor blade relative to the yoke arm during flight. The three spherical bearings are evenly spaced from each other on the yoke arm. For example, the bearings can be spaced 0.076 m (3 inches) apart.

Each of the three spherical bearings can include a race or housing, a spherical ball rotatably carried within the housing; and a passage extending through the spherical ball and configured to couple with a first attachment means associated with the tail rotor blade for securing the rotor blade to the yoke arm. The passage extending through the spherical ball can permit the attachment means for securing the tail rotor blade to the yoke arm. The attachment means can be a bolt or other attachment means.

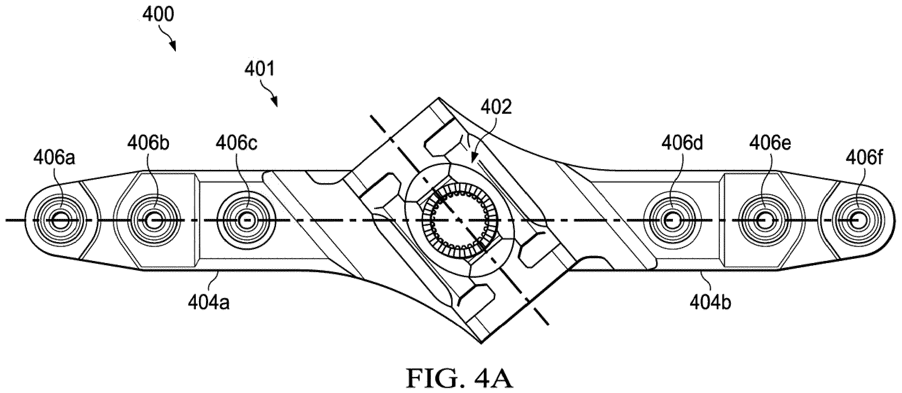

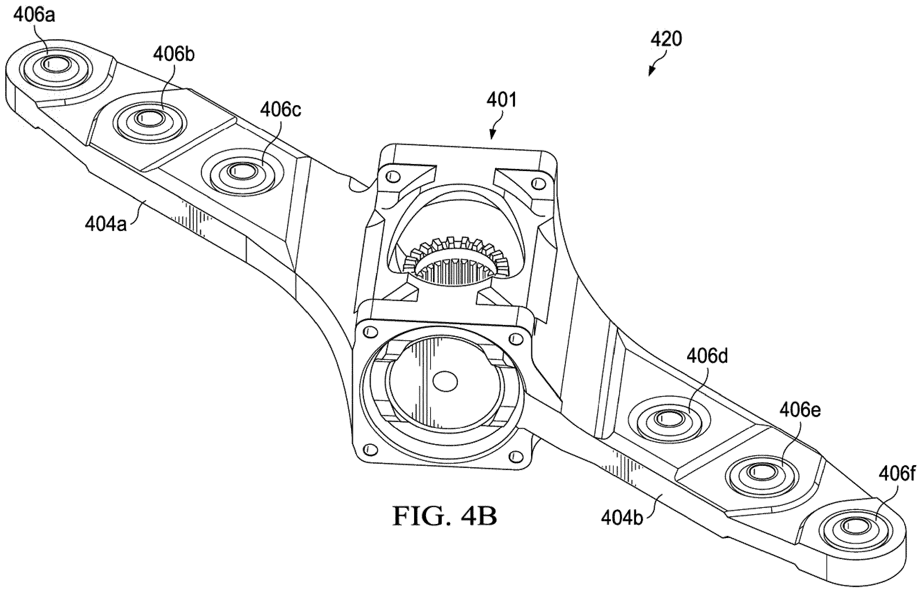

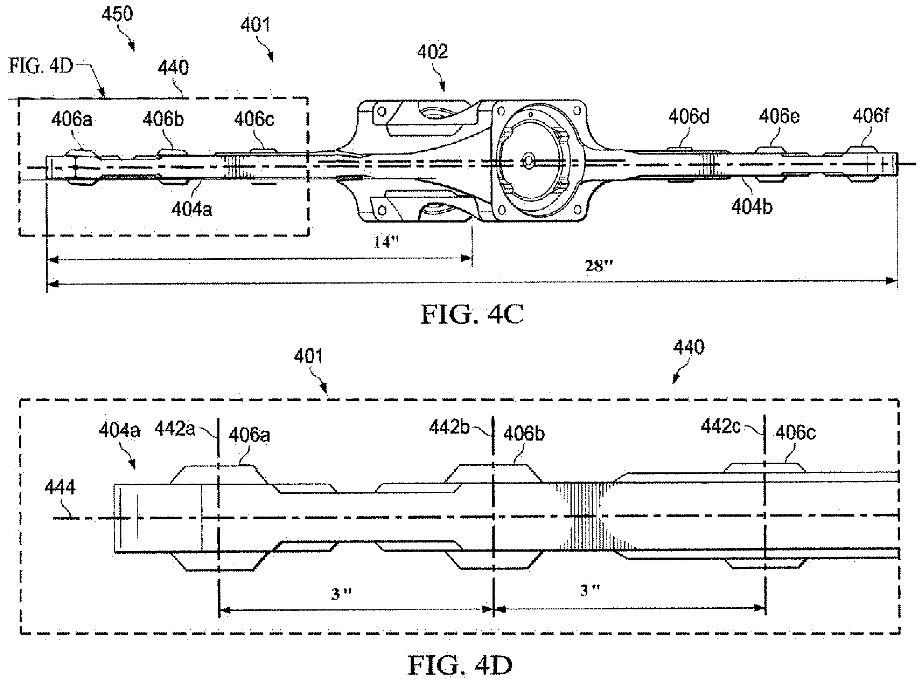

FIGS. 4A-D illustrate various views of an example teetering tail rotor yoke with three spherical bearings in accordance with embodiments of the present disclosure. FIG. 4A is a top-down view 400 of the three bearing teetering tail rotor yoke 401 (three bearing yoke, for short) in accordance with embodiments of the present disclosure. FIG. 4B is an isometric view 420 of the three bearing teetering tail rotor yoke 401. FIG. 4C is a side view 430 of the three bearing yoke 401. FIG. 4D is a close-up of a yoke arm 404a of the yoke 401.

The three bearing yoke 401 has a center section 402 and two arms 404a and 404b. The center section 402 accommodates a flapping bearing which engages with a tail rotor mast, thereby attaching the teetering rotor to the drive system. The center section 402 can have an elliptical shape, which can reduce the weight of the yoke 400, while enabling optimization of localized stresses and strains.

Each of the two arms 404a and 404b facilitate attachment to rotor blades that are underslung relative to the flapping hinge. The blades are attached to the yoke 400 via spherical bearings 406a-c and 406d-f, three on each arm, equally spaced apart and centered at the Pitch Change Axis (PCA). The flapping hinge is oriented at a desired angle relative to the Mean Aerodynamic Chord (MAC) of the blade to induce a Delta-3 hinge. Lastly, the center section has provisions to preload the flapping bearing at install as necessary.

The yoke 400 is shown with three bearings on each yoke arm. Yoke arm 404a includes a first bearing 406a, a second bearing 406b, and a third bearing 406c, each of the bearings being configured to allow feathering movement of the blade relative to the yoke arm 404a. Yoke arm 404b includes a first bearing 406d, a second bearing 406e, and a third bearing 406f, each of the bearings being configured to allow feathering movement of the blade relative to the yoke arm 404b. In the preferred embodiment, the bearings 406a-f are spherical bearings that sit flush with an upper surface and a lower surface of yoke arms; however, it will be appreciated that other types of bearings and devices could be used in lieu of the preferred embodiment. The spherical bearings allow for feathering motion of the rotor blades, which provides significant advantageous over conventional tail rotors, namely tail rotors having rotor blades rigidly attached to the yoke arm.

Turning to FIG. 4D, one yoke arm 404a of the yoke 401 is shown. Yoke arm 404a includes a longitudinal axis 444. Each earing 406a-c has a centerline axis 442a-c, respectively, that defines a center axis through the bearing orthogonal to the longitudinal axis 444. Each of the centerlines 442a-c is aligned with the longitudinal axis 444 of the yoke arm 404a. The three bearings 406a-c are configured to allow feathering movement of a rotor blade relative to the longitudinal axis 444 of the yoke arm 404a, while restricting transverse and longitudinal movement of the rotor blade relative to the longitudinal axis 444. It is understood that yoke arm 404b is substantially similar as yoke arm 404a.

The spherical bearings can be attached or affixed to the yoke arm (e.g., via swaging or staking). A rotor blade can be attached to a yoke through the three or more spherical bearings. Each of the three or more spherical bearings can restrict longitudinal and transverse movement of the rotor blade relative to the yoke. Feathering of the blade can be compensated for by the at least three spherical bearings that allow for pivoting movement of the rotor blade relative to the yoke.

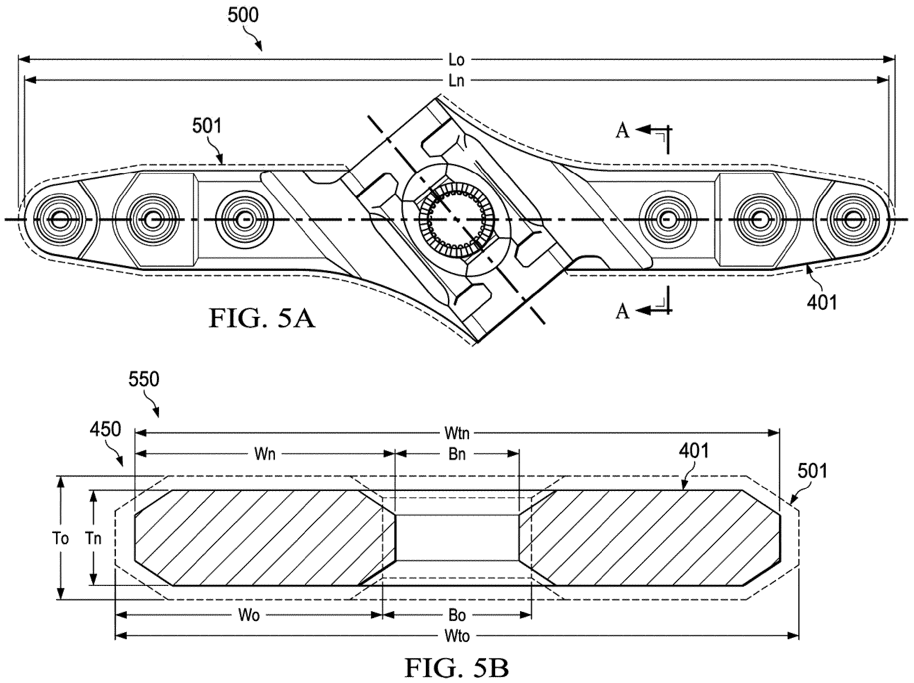

FIG. 5A is a schematic diagram 500 comparing a three bearing yoke with a two bearing yoke in accordance with embodiments of the present disclosure. The three bearing yoke 401 is illustrated. The two bearing yoke 501 is illustrated as an outline around the three bearing yoke 401. The two bearing yoke 501 can have a typical length Lo of 0.724 m (28.5 inches). By way of non-limiting example, the three bearing yoke 401 of the present disclosure can have a length Ln of 0.7112 m (28.00 inches), which can accommodate a typical CF load of 116000 N (26,000 lbf).

More generally, the three bearing yoke can have dimensions being of 10% reduction in cross-sectional area for the most highly loaded bearing location, which translates into material and weight savings. The actual dimensions of the three bearing yoke can be based on application specificity, such as CF loads and/or design packaging.

FIG. 5B is a cross-sectional view A-A 550 from FIG. 5A. The cross sectional view 550 illustrates the two bearing yoke 501 as a dotted line around the three bearing yoke 401. Example dimensions of the two bearing yoke are shown:

**Table 1. Example dimensions of two bearing yoke in metres (inches)**

| | |
|---|---|
| Width total Wto | 0.09208 (3.625) |
| Width from edge to bearing Wo | 0.02318 (0.9125) |
| Bearing gap Bo | 0.046 (1.8) |
| Thickness To | 0.0279 (1.10) |
| Length Lo | 0.724 (28.5) |

**Table 2. Example dimensions of three bearing yoke in metres (inches)**

| | |
|---|---|
| Width total Wtn | 0.08255 (3.250) |
| Width from edge to bearing Wn | 0.0222 (0.875) |
| Bearing gap Bn | 0.038 (1.5) |
| Thickness Tn | 0.022 (0.85) |
| Length Ln | 0.711 (28.0) |

The bearing gap Bo represents a diameter of the spherical bearing for the two bearing yoke. The two bearing yoke 501 would use a larger spherical bearing than the three bearing yoke 401, so that Bo > Bn. The use of smaller bearings include cost savings on the bearings and a more compact design packaging.

The flowcharts and diagrams in the figures illustrate the architecture, functionality, and operation of possible implementations of various embodiments of the present disclosure. It should also be noted that, in some alternative implementations, the function(s) associated with a particular block may occur out of the order specified in the figures. For example, two blocks shown in succession may, in fact, be executed substantially concurrently, or the blocks may sometimes be executed in the reverse order or alternative orders, depending upon the functionality involved.

Although several embodiments have been illustrated and described in detail, numerous other changes, substitutions, variations, alterations, and/or modifications are possible without departing from the scope of the present invention, as defined by the appended claims. The particular embodiments described herein are illustrative only, and may be modified and practiced in different but equivalent manners, as would be apparent to those of ordinary skill in the art having the benefit of the teachings herein. Those of ordinary skill in the art would appreciate that the present disclosure may be readily used as a basis for designing or modifying other embodiments for carrying out the same purposes and/or achieving the same advantages of the embodiments introduced herein. For example, certain embodiments may be implemented using more, less, and/or other components than those described herein. Moreover, in certain embodiments, some components may be implemented separately, consolidated into one or more integrated components, and/or omitted. Similarly, methods associated with certain embodiments may be implemented using more, less, and/or other steps than those described herein, and their steps may be performed in any suitable order.

Numerous other changes, substitutions, variations, alterations, and modifications may be ascertained to one of ordinary skill in the art and it is intended that the present disclosure encompass all such changes, substitutions, variations, alterations, and modifications as falling within the scope of the appended claims.

## Claims

1. A rotorcraft (100) comprising:
a tail rotor assembly (300), the tail rotor assembly (300) comprising:
a yoke (401), the yoke (401) comprising a yoke arm (404a, 404b);
a rotor blade (302a-d); and
at least three spherical bearings (406a-c, 406d-f), each of the at least three spherical bearings (406a-c, 406d-f) carried by the yoke arm (404a, 404b) and configured to pivotally secure the rotor blade (302a-d) to the yoke arm (404a, 404b) and to allow feathering movement of the rotor blade (302a-d) relative to the yoke arm (404a, 404b) during flight;
**characterised in that**
the at least three spherical bearings (406a-c, 406d-f) are evenly spaced from each other on the yoke arm (404a, 404b); and
the yoke (401) comprises a length in the range of 0.699 m (27.5 inches) and 0.724 m (28.5 inches).

2. The rotorcraft (100) of claim 1, wherein each of the at least three spherical bearings (406a-c, 406d-f) comprises:
a housing;
a spherical ball rotatably carried within the housing; and
a passage extending through the spherical ball and configured to couple with a first attachment means associated with the rotor blade (302a-d) for securing the rotor blade (302a-d) to the yoke arm (404a, 404b).

3. The rotorcraft (100) of claim 1 or of claim 2, wherein the yoke arm (404a, 404b) has a longitudinal axis (444), each of the at least three spherical bearings (406a-c, 406d-f) comprising a center line (442a-c); and
wherein the each of the centerlines (442a-c) is aligned with the longitudinal axis (444) of the yoke arm (404a, 404b).

4. The rotorcraft (100) of claim 3, wherein the at least three bearings (406a-c, 406d-f) are configured to allow feathering movement of the rotor blade (302a-d) relative to the longitudinal axis (444), while restricting transverse and longitudinal movement of the rotor blade (302a-d) relative to the longitudinal axis (444).

5. The rotorcraft (100) of any preceding claim, wherein the yoke arm (404a, 404b) comprises a thickness in the range of 0.019 m (0.75 inches) to 0.025 m (1.0 inches).

6. The rotorcraft (100) of any preceding claim, wherein the yoke arm (404a, 404b) comprises a width in a range of 0.076 m (3.0 inches) to 0.089 m (3.5 inches).

## Patentansprüche

1. Drehflügler (100), umfassend:
eine Heckrotoranordnung (300), wobei die Heckrotoranordnung (300) umfasst:
ein Joch (401), wobei das Joch (401) einen Jocharm (404a, 404b) umfasst;
ein Rotorblatt (302a-d); und
mindestens drei sphärische Lager (406a-c, 406d-f), wobei jedes der mindestens drei sphärischen Lager (406a-c, 406d-f) getragen ist mittels des Jocharms (404a, 404b) und eingerichtet, um schwenkbar das Rotorblatt (302a-d) an dem Jocharm (404a, 404b) zu sichern und Federbewegungen des Rotorblatt (302a-d) relativ zu dem Jocharm (404a, 404b) während des Flugs zu erlauben;
**dadurch gekennzeichnet, dass**
die mindestens drei sphärischen Lager (406a-c, 406d-f) gleichmäßig voneinander beabstandet sind auf dem Jocharm (404a, 404b); und
das Joch (401) eine Länge umfasst in dem Bereich von 0,699 m (27,5 Inches) und 0,724 m (28,5 Inches).

2. Drehflügler (100) nach Anspruch 1, wobei jedes der mindestens drei sphärischen Lager (406a-c, 406d-f) umfasst:
eine Gehäuse;
eine sphärische Kugel, rotierbar getragen innerhalb des Gehäuses; und
eine Passage, die sich durch die sphärische Kugel erstreckt und eingerichtet, um mit ersten Befestigungsmitteln zu koppeln, assoziiert mit dem Rotorblatt (302a-d) zum Sichern des Rotorblatts (302a-d) an dem Jocharm (404a, 404b).

3. Drehflügler (100) nach Anspruch 1 oder nach Anspruch 2, wobei der Jocharm (404a, 404b) eine longitudinale Achse (444) hat, wobei jedes der mindestens drei sphärischen Lager (406a-c, 406d-f) eine Mittenlinie (442a-c) umfasst; und
wobei jede der Mittenlinien (442a-c) mit der longitudinalen Achse (444) des Jocharms (404a, 404b) ausgerichtet ist.

4. Drehflügler (100) nach Anspruch 3, wobei die mindestens drei Lager (406a-c, 406d-f) eingerichtet sind, um Federbewegungen des Rotorblatts (302a-d) relativ zu der longitudinalen Achse (444) zu erlauben, während transversale und longitudinale Bewegung des Rotorblatts (302a-d) relativ zu der longitudinalen Achse (444) beschränkt wird.

5. Drehflügler (100) nach einem vorstehenden Anspruch, wobei der Jocharm (404a, 404b) eine Dicke umfasst in dem Bereich von 0,019 m (0,75 Inches) bis 0,025 m (1,0 Inches).

6. Drehflügler (100) nach einem vorstehenden Anspruch, wobei der Jocharm (404a, 404b) eine Breite umfasst in einem Bereich von 0,076 m (3,0 Inches) bis 0,089 m (3,5 Inches).

## Revendications

1. Giravion (100) comprenant :
un ensemble de rotor de queue (300), l'ensemble de rotor de queue (300) comprenant :
un étrier (401), l'étrier (401) comprenant un bras d'étrier (404a, 404b) ;
une pale de rotor (302a-d) ; et
au moins trois paliers sphériques (406a-c, 406d-f), chacun des au moins trois paliers sphériques (406a-c, 406d-f) étant porté par le bras d'étrier (404a, 404b) et configuré pour fixer de manière pivotante la pale de rotor (302a-d) au bras d'étrier (404a, 404b) et pour permettre un mouvement de mise en drapeau de l'arbre de rotor (302a-d) par rapport au bras d'étrier (404a, 404b) pendant le vol ;
**caractérisé en ce que** les au moins trois paliers sphériques (406a-c, 406d-f) sont régulièrement espacés l'un de l'autre sur le bras d'étrier (404a, 404b) ; et
l'étrier (401) comprend une longueur dans la plage de 0,699 m (27,5 pouces) et 0,724 m (28,5 pouces).

2. Giravion (100) selon la revendication 1, dans lequel chacun des au moins trois paliers sphériques (406a-c, 406d-f) comprend :
un boîtier ;
une bille sphérique portée en rotation à l'intérieur du boîtier ; et
un passage s'étendant à travers la bille sphérique et configuré pour se coupler avec un premier moyen de fixation associé à la pale de rotor (302a-d) pour la fixation de la pale de rotor (302a-d) au bras d'étrier (404a, 404b).

3. Giravion (100) selon la revendication 1 ou 2, dans lequel le bras d'étrier (404a, 404b) a un axe longitudinal (444), chacun des au moins trois paliers sphériques (406a-c, 406d-f) comprenant une ligne centrale (442a-c) ; et
dans lequel la chacune des lignes centrales (442a-c) est alignée avec l'axe longitudinal (444) du bras d'étrier (404a, 404b).

4. Giravion (100) selon la revendication 3, dans lequel les au moins trois paliers (406a-c, 406d-f) sont configurés pour permettre un mouvement de mise en drapeau de la pale de rotor (302a-d) par rapport à l'axe longitudinal (444), tout en restreignant un mouvement transversal et longitudinal de la pale de rotor (302a-d) par rapport à l'axe longitudinal (444).

5. Giravion (100) selon l'une quelconque des revendications précédentes, dans lequel le bras d'étrier (404a, 404b) comprend une épaisseur dans la plage de 0,019 m (0,75 pouce) à 0,025 m (1,0 pouce).

6. Giravion (100) selon l'une quelconque des revendications précédentes, dans lequel le bras d'étrier (404a, 404b) comprend une largeur dans une plage de 0,076 m (3,0 pouces) à 0,089 m (3,5 pouces).
